# EUROPEAN PATENT APPLICATION

(11) **EP 4 732 988 A1**
(43) Date of publication of application: **29.04.2026**
(21) Application number: 25209735.7
(22) Date of filing: 20.10.2025
(51) Int. Cl.: B23K 26/38, B23K 26/70, B23K 101/18, B23K 103/04, B23K 26/08, B23K 37/04

(54) **LASER CUTTING MACHINE**

(30) Priority: 22.10.2024 IT 202400023502
(71) Applicant: Laser Veronese S.r.l., 37060 Sona (Verona) (IT)
(72) Inventor: CHEN, DEZHOU, 37060 SONA (VERONA) (IT)
(74) Representative: Anselmi, Davide

(57) **Abstract**

A laser cutting machine (100), comprising a support structure (20), a laser cutting unit (30) connected to said support structure (20) and movable inside a work area (W), and a shielding means (40) integrally connected to said laser cutting unit (30). Wherein said shielding means (40) defines a barrier that shields against reflected rays produced by laser machining and encloses them inside a shielding volume. Specifically, the laser cutting unit (30) comprises a frame (25), a first pair (50a, 50b) of slide guides configured to define a sliding coupling with said laser cutting unit (30); and a second pair (60a, 60b) of slide guides configured to define a sliding coupling with said shielding means (40). Wherein the first and second pairs (50a, 50b, 60a, 60b) of slide guides are independent of each other so as to allow a substantially synchronised sliding movement between said shielding means (40) and said laser cutting unit (30).

The cutting unit further comprises a pair of dampers (70a, 70b), each configured to dampen a reciprocal movement of said shielding means (40) relative to said cutting unit (30). Wherein each damper (70a, 70b) comprises a shaped element (71) and a cylindrical actuator (73).

## Description

### TECHNICAL FIELD

The present invention relates to a laser cutting machine, in particular intended to produce parts of varying nature by means of a cutting operation.

In greater detail, the machine according to the invention fits into the sector of the production and marketing of machine tools, in particular cutting machines, and even more particularly cutting machines which use a source that emits a laser beam suitable for cutting a plurality of materials of varying nature, in particular substantially flat metal sheets, preferably made of a structural carbon steel (e.g. S235, S355 and S420).

In addition, the machine according to the invention fits into the sector of the production and marketing of devices, assemblies and apparatus associated with such laser cutting machines.

The laser cutting machine according to the invention has specific application in the industrial mechanical construction sector for the production of various types of parts and components, for example mechanical parts (e.g. gears, brackets, flanges, plates, various supports for machinery, panels, and still others).

### PRIOR ART

The use of laser cutting machines suitable for cutting a plurality of materials to obtain components such as the ones briefly mentioned above is well known in the reference technical sector.

In particular, laser cutting machines of the known type are widely used in industrial mechanical structural metalwork applications, in particular to cut sheets and/or plates and/or the like having a substantially flat shape.

More specifically, with reference to the cutting of sheet steel, a laser cutting machine of the known type typically comprises a bed having a substantially flat shape (e.g. square or rectangular) and which extends parallel to the floor. The bed has an upper surface, opposite a lower surface intended to be rested on the floor and configured to accommodate a plurality of grids adapted to support one or more metal sheets to be cut. In particular, the aforesaid grids extend in such a way as to substantially cover the upper surface of the bed and define a usable work area of the machine.

The machine of the known type further comprises a cutting head movable inside the work area and configured to convey and direct a laser beam, generated by a laser source, towards the surface of the sheet to be cut. Examples of laser beams known to date and used in laser cutting machines are CO₂, fibre and diode lasers.

The machine of the known type further comprises a shielding frame comprising a plurality of panels, connected to one another and at least in part reciprocally movable, and arranged along perimeter sides of the bed so as to shield the work area of the machine from an operator who is using it.

In other words, the shielding frame defines a cage that separates and protects an operator from the work area of the machine during the emission of a laser beam that cuts the metal sheet. A laser cutting machine as just described is defined to be of the closed type.

In fact, the presence of the shielding frame is fundamental from a regulatory safety standpoint in order to shield against the rays produced by the laser beam and reflected by the metal sheet during a cutting operation, and thus to protect an operator's eyes and vision.

These reflected rays are invisible to the human eye and, in serious cases, may also irreversibly damage the eyesight of an operator who is exposed to them for a prolonged interval of time and/or a plurality of times.

The laser cutting machine of the known type as briefly described thus far has shown in practice not to be free of drawbacks.

In particular, the main drawback lies in the fact that the laser cutting machines of the known type are cumbersome and not easy for an operator to use. In fact, the presence of a shielding frame that covers substantially the whole work area of the machine makes the machine itself cumbersome and not easy for an operator to use. In greater detail, the substantially total coverage of the aforesaid work area of the machine, besides occupying a large volume within the industrial facility in which the machine is installed, prevents an operator who is using it from having a continuous and constant visual supervision over the cutting processes during the operation of the machine.

Another drawback lies in the fact that the laser cutting machines of the known type are not very flexible from a production standpoint. In fact, the aforesaid shielding frame makes using the machine itself difficult during operations of loading and/or unloading of the metal sheets to be machined, as well as of the mechanical parts cut by the laser. As a result, during the aforesaid loading and/or unloading operations, impacts and/or collisions may occur between the shielding frame and the parts cut by the laser.

A further drawback lies in the fact that the laser cutting machines of the known type are costly. In fact, the aforesaid shielding frame entails a high cost for components connected to and cooperating with each other. In greater detail, the shielding frame comprises a plurality of panels, some of which are fixed, while others are slidably connected to the fixed panels so as to provide a closeable opening through which an operator may access the work area of the laser cutting machine.

Examples of laser cutting machines of the known type are described in documents US2010084385A1, CN218657354 U, EP2468449 A1 and US2019299330 A1. However, such documents have revealed not to be satisfactory in practice, as they show one or more of the drawbacks described above.

### OBJECTS OF THE INVENTION

The object of the present invention is to provide a laser cutting machine which enables the drawbacks of the abovementioned prior art to be overcome.

A further object of the present invention is to provide a compact, easy-to-use laser cutting machine, which in particular enables a continuous and constant visual monitoring thereof on the part of an operator during the laser cutting operations, while maintaining - at the same time - a high level of work safety.

A further object of the present invention is to provide a laser cutting machine that is simple and economical.

A further object of the present invention is to provide a laser cutting machine that is safe and reliable during its operation.

A further object of the present invention is to provide a laser cutting machine that has an alternative and/or improved configuration compared to the known traditional solutions, both in terms of construction and in functional terms.

### SUMMARY

All the objects, both individually and in any combination, and others that will emerge from the detailed description that follows are achieved, according to the invention, with a laser cutting machine having the features specified in the independent claim 1.

The dependent claims delineate particularly advantageous embodiments.

### BRIEF DESCRIPTION OF THE FIGURES

Additional features and advantages of the present invention will become more clearly apparent from the approximate and thus non-limiting description of a preferred but not exclusive embodiment of a laser cutting machine, as illustrated in the appended drawings, in which:
- figure 1 shows, according to a perspective view, a laser cutting machine according to one embodiment of the invention;
- figure 2 shows, according to a perspective view, the machine illustrated in figure 1 with some parts removed to better highlight others;

- figure 3 shows, according to a perspective view, the machine illustrated in figure 2 with some parts exploded;
- figure 4 shows, according to an enlarged perspective view, a detail of the machine illustrated in figure 3;
- figure 5A shows, according to a front perspective view, a detail of the machine illustrated in figure 1-3;
- figure 5B shows, according to a rear perspective view, the detail illustrated in figure 5A;

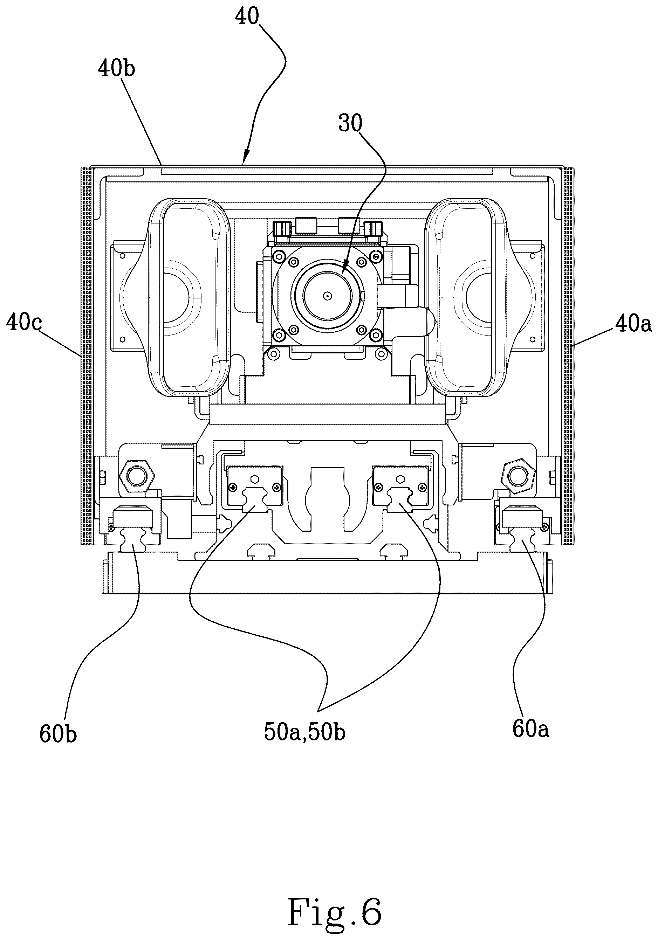

- figure 6 shows, according to a bottom plan view, a detail of the machine illustrated in figure 2.

With reference to the drawings, they serve solely to illustrate embodiments of the invention with the aim of better clarifying, in combination with the description, the inventive principles at the basis of the invention.

### DETAILED DESCRIPTION OF THE INVENTION

With reference to the appended figures, a laser cutting machine according to the present invention is denoted in its entirety by the number 100.

The laser cutting machine 100 is particularly intended to perform laser machining on products of varying nature to produce mechanical parts, e.g. brackets, flanges, pinions, gear wheels and still others, and intended for multiple industrial applications, for example in mechanical construction.

Hereinafter in the present description, with the term "product to be machined", specific reference will be made to a laser cutting machine for cutting metal sheets, in particular made of carbon steel, such as, for example, those commonly used for mechanical structural metalwork and made of S235, S355, S420 and the like. The laser cutting machine 100 according to the invention is intended to produce mechanical parts, e.g. brackets, flanges, pinions, gear wheels and still others, and intended for multiple industrial applications, for example in mechanical construction.

However, the laser cutting machine 100 according to the invention may also be used to cut other types of materials, such as, for example, wood, textiles, paper and/or cardboard, polymeric materials and still others, without going outside the scope of protection.

For the purposes of the present description, the term "laser" is to be understood as a concentrated ray of light directed towards a surface of a product to be machined, and having a predefined power. This ray of light is capable of engraving and cutting materials of varying nature, in particular metals such as the one described above. Preferably, a gas (e.g. oxygen or nitrogen) may also be used to facilitate the removal of the material melted by the laser, to make the cut even cleaner and to prevent the formation of slag.

In accordance with the embodiment illustrated in the appended figures, a laser cutting machine 100 comprises a support structure 20 configured to be rested on the floor and internally defining a work area W adapted to receive a product, in particular preferably a steel sheet, on which to perform laser machining, in particular a cutting operation.

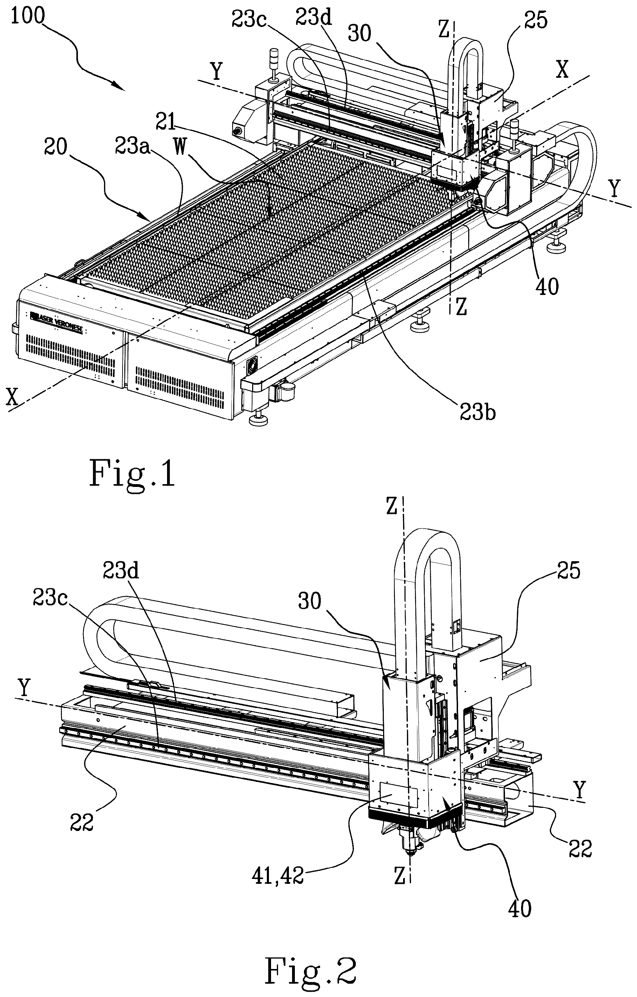

According to one aspect of the invention, as illustrated in particular in figure 1, the support structure 20 has a substantially square or rectangular shape, and extends substantially parallel to the floor.

In greater detail, the support structure 20 has a lower surface intended to be rested on the floor and an upper surface, opposite the lower surface, comprising a plurality of support elements 21, each configured to support a product to be machined.

According to one aspect of the invention, the support elements 21 comprise one or more metal grids, each having a profile of the sawtooth type. In other words, each grid has a surface with points, i.e. of the sawtooth type, precisely, on which a product to be machined (e.g. a metal sheet) is rested.

The laser cutting machine 100 further comprises a cross member 22, illustrated in detail in figure 2, slidably connected to the support structure 20 by means of a first and second track 23a, 23b extending along a first axis X-X parallel to the floor, and mounted on the support structure 20, so as to define a kinematic coupling of the prismatic type with the aforesaid cross member 22. In other words, the prismatic slidable coupling between the cross member 22 and the first and second tracks 23a, 23b integral with the support structure, enables the movement of the cross member 22 itself along the first axis X-X.

As illustrated in figure 1, the first and second tracks 23a, 23b are positioned along lateral edges of the support structure 20.

According to one aspect of the invention, the cross member 22 comprises a third and a fourth track 23c, 23d, configured to define a slidable coupling of the prismatic type with a laser cutting unit 30 (introduced and described in greater detail below). In particular, the third and fourth tracks 23c, 23d enable a movement of the laser cutting unit 30 along a second axis Y-Y orthogonal to the first axis X-X. Preferably, the first and second tracks 23a, 23b are wholly analogous to the third and fourth tracks 23c, 23d.

In this manner, the cutting unit 30 can move along the first and second axes X-X, Y-Y (which define the aforesaid work area W) and thus substantially cover every position of the work area W.

The laser cutting machine 100 further comprises a laser cutting unit 30 connected to the support structure 20, in particular slidably mounted on the cross member 22.

In greater detail, the laser cutting unit 30 extends and is movable along a cutting axis Z-Z which is transverse, preferably orthogonal, to the work area W, and is arranged in a raised position relative to the work area W. Specifically, the laser cutting unit 30 is vertically oriented, and is movable inside the aforesaid work area W along a plane parallel to the work area W itself. The laser cutting unit 30 is configured to emit a laser beam along the cutting axis Z-Z towards the product on which to perform laser machining.

Preferably, the laser beam is produced by a laser source connected to the cutting unit 30 and arranged proximal to the latter.

In accordance with the embodiment illustrated in the appended figures 1-4, the laser cutting machine 100 comprises a shielding means 40 integrally connected to the laser cutting unit 30 and configured to define a shielding volume that surrounds, at least partially, the laser cutting unit 30 so as to shield it in relation to an outside environment in which an operator is located. In greater detail, as illustrated in figures 1-3, the shielding volume has a smaller surface extent than the work area W. In other words, the shielding means 40, and the corresponding shielding volume defined by it, surround the laser cutting unit 30, at least partially, so as to envelop it to create a shield or cage around the laser cutting unit 30 itself.

The shielding means 40 defines a barrier that shields against rays reflected by the product on which laser machining is performed and encloses them inside the aforesaid said shielding volume during a laser cutting process.

In other words, the shielding means 40 is configured to shield against the aforesaid reflected rays and contain (i.e. confine) them inside the shielding volume, thereby at least partially preventing them from getting outside the volume itself.

Advantageously, the laser cutting machine 100 is safe and reliable, since it allows for shielding against the laser rays reflected by the product being machined, thus ensuring an adequate level of safety for an operator's eyesight, plus it has a substantially open structure which is thus easily accessible to an operator.

According to one aspect of the invention, the shielding means 40 is slidably connected to the laser cutting unit 30 and movable along the cutting axis Z-Z between a rest configuration, in which the shielding means 40 is in an inactive position, i.e. corresponding to a raised position relative to a surface of the product on which to perform laser machining, and a working configuration, i.e. corresponding to a position in which the shielding means 40 is proximal to the surface of the product on which laser machining is to be performed.

According to one aspect of the invention, the shielding means 40 has a movement that is substantially synchronised with the movement of the laser cutting unit 30.

Advantageously, the shielding means 40 shields against the laser rays reflected during machining of a product and moves substantially in synchrony with the laser cutting unit 30.

In accordance with the embodiment as illustrated in particular in figures 2-3, the shielding means 40 comprises a plurality of panels 40a, 40b, 40c, in particular preferably three panels, connected to one another so as to define a shielding shell that surrounds, at least partially, the cutting unit 30.

Preferably, the three panels 40a, 40b, 40c are connected to one another in such a way as to define a structure having a substantially "C"-type shape (in accordance with a top or bottom plan view).

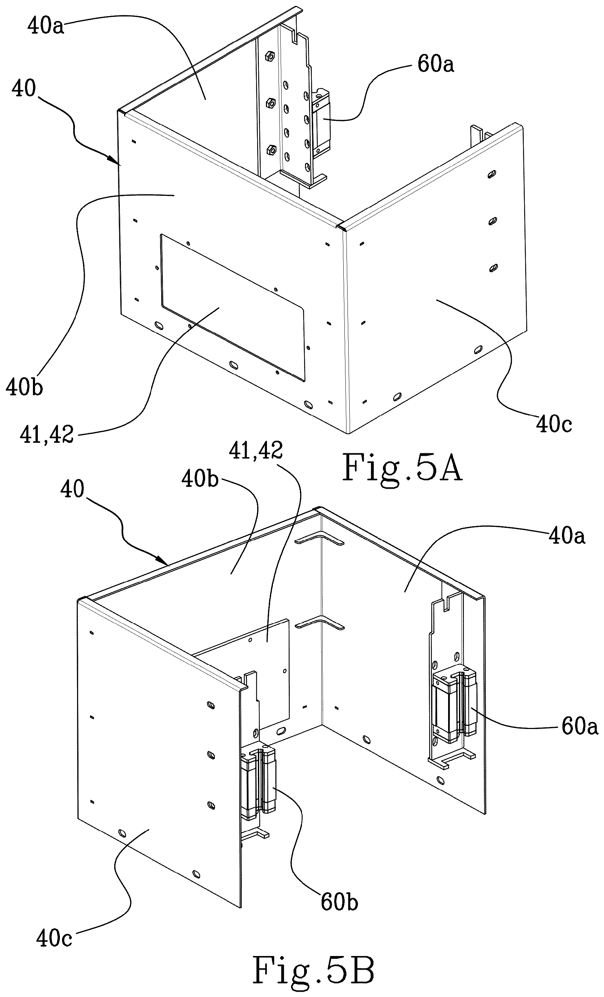

As shown in figures 5A and 5B, the panels 40a, 40b, 40c are preferably arranged in such a way as to define a squared, or box-like structure. Alternatively, the same panels 40a, 40b, 40c can also be arranged in such a way as to define a rounded structure, that is, at least partly joined (i.e. curved).

According to one aspect of the invention, the panels 40a, 40b, 40c are reversibly connected to one another in such a way as to define a disassemblable structure.

Advantageously, the panels 40a-40c are easy to maintain, that is, they enable simple, rapid maintenance operations (e.g. replacement and/or repair of panels).

Preferably, each of the aforesaid panels 40a, 40b, 40c is made of a metal material, for example sheet metal, and they are connected to one another by means of threaded elements, for example screws and nuts, or riveted elements.

Preferably, the connection between each panel 40a, 40b, 40c is made using auxiliary elements, such as, for example, bars, plates, brackets or profiles of varying nature, arranged transversely to the cutting axis Z-Z and connected to the aforesaid panels 40a, 40b, 40c by means of the aforesaid threaded elements.

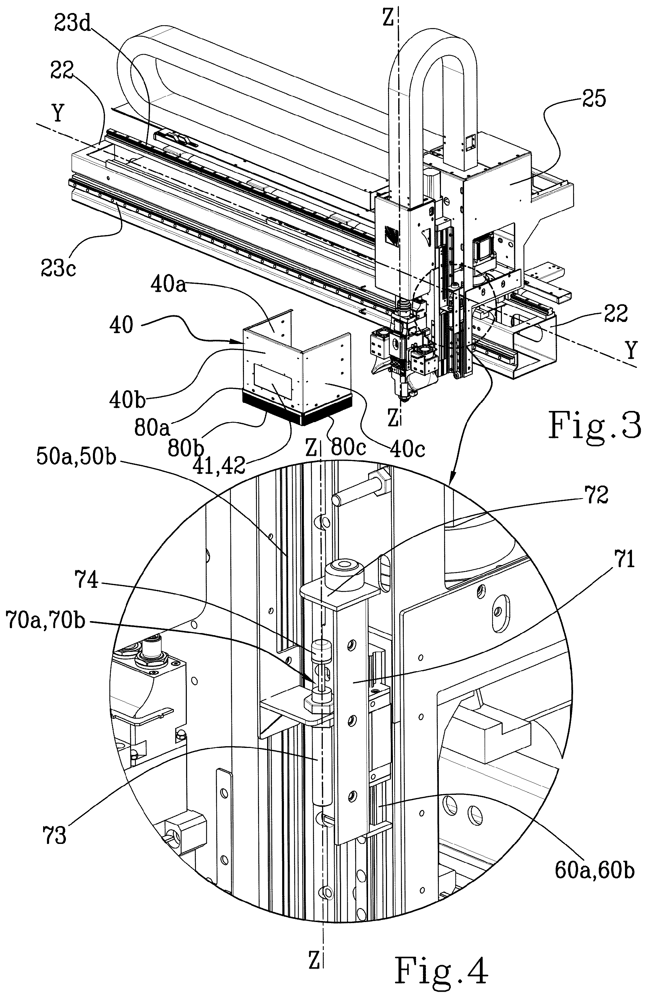

As illustrated in figures 2 and 3, the laser cutting unit 30 comprises a frame 25. In greater detail, the frame 25 is slidably coupled to the cross member 22 by means of the third and fourth tracks 23c, 23d and is movable along the second axis Y-Y.

The laser cutting unit 30 further comprises a first pair 50a, 50b of slide guides, connected to the frame 25, arranged parallel to the cutting axis Z-Z, and configured to define a sliding coupling, preferably of the prismatic type, with the laser cutting unit 30.

The laser cutting unit 30 further comprises a second pair 60a, 60b of slide guides, connected to the frame 25, arranged parallel to the first pair 50a, 50b of slide guides, and configured to define a sliding coupling with the shielding means 40.

In particular, according to one aspect of the invention, the first and second pairs 50a, 50b, 60a, 60b of slide guides are independent of each other so as to enable a substantially synchronised movement between the shielding means 40 and the laser cutting unit 30.

As illustrated in detail in figure 4, the machine 100 comprises a pair of dampers 70a, 70b interposed between the laser cutting unit 30 and the shielding means 40, so as to enable a reciprocal interaction between them. In greater detail, each damper 70a, 70b is configured to dampen a reciprocal movement of the shielding means 40 relative to the cutting unit 30, between the rest configuration and the working configuration.

In other words, each damper 70a, 70b is suitable for buffering and/or damping a contact between the laser cutting unit 30 and the shielding means 40 when they come into reciprocal contact during a movement thereof.

As illustrated in detail in figures 3-4, the dampers 70a, 70b are aligned along the cutting axis Z-Z and positioned in lateral portions of the shielding means 40, in particular mounted on one or more of the panels 40a, 40b, 40c arranged laterally, and thus laterally to the laser cutting unit 30.

As illustrated in figure 4, each damper 70a, 70b comprises a shaped element 71 mounted integral with the shielding means 40, preferably positioned on the inner surface of one or more of the panels 40a, 40b, 40c. The shaped element 71 is arranged parallel to the cutting axis Z-Z and comprises a stop portion 72 extending transversely to and projecting from the cutting axis Z-Z.

More specifically, the stop portion 72 is configured to define a mechanical stop, i.e. it has a shape projecting transversely from the cutting axis Z-Z and adapted to be intercepted by a piston of an actuator (introduced and described below) during a movement thereof.

Each damper 70a, 70b further comprises a cylindrical actuator 73 mounted integral with the laser cutting unit 30, arranged parallel to the cutting axis Z-Z, and comprising a piston 74 configured to intercept and abut against the stop portion 72 to define the aforesaid mechanical stop. According to one aspect of the invention, the cylindrical actuator 73 is a gas spring or a spring cylinder.

Preferably, the damping function performed by the cylindrical actuator 73, between the laser cutting unit 30 and the shielding means 40, can also be performed by an axial spring oriented with the axis thereof parallel to the cutting axis Z-Z.

According to one aspect of the invention, the shielding means 40 comprises brush-like elements 80a, 80b, 80c connected to each of the panels 40a, 40b, 40c in a respective edge perimeter portion.

Each brush-like element 80a, 80b, 80c is configured to be arranged, during use, in proximity to a surface of the product to be laser machined, so as to reduce and/or limit a diffusion of reflected rays towards the external environment and retain them inside said shielding volume.

In other words, each brush-like element 80a, 80b, 80c is arranged, during use, facing towards a surface of a product to be machined, and is configured to reduce a space between each brush-like element itself and the aforesaid surface. In this manner, the laser rays are enclosed inside the panels 40a, 40b, 40c of the shielding means 40.

Preferably, each brush-like element 80a, 80b, 80c is made of a deformable material.

Preferably, each brush-like element 80a, 80b, 80c is made of a fire-resistant material.

Advantageously, each brush-like element 80a, 80b, 80c is substantially resistant to heat and thus to formation of flames that could potentially be ignited during a contact between the reflected laser rays and a surface of the aforesaid brush-like elements 80a, 80b, 80c. Preferably, each brush-like element 80a, 80b, 80c has a plurality of fringes, solidly connected to one another at a base end corresponding to the perimeter edge portion of each panel 40a, 40b, 40c, and free at the opposite end (i.e. the end proximal to the surface of the product to be machined).

Preferably, the fringes are oriented parallel to one another and parallel to the cutting axis Z-Z. In accordance with the embodiment illustrated in the appended figures 5A-5B, the shielding means 40 has an opening 41 protected by a covering element 42 to enable an operator to visually inspect said shielding volume during the operation of said laser cutting unit 30.

Preferably, the opening 41 is obtained on a head panel between the aforesaid panels 40a, 40b, 40c which make up the shielding means. In other words, the opening 41 is obtained on the panel on which the dampers 70a, 70b are not mounted, i.e. on the panel oriented along the first axis X-X.

As illustrated in figures 5A-5B, the opening 41 preferably has a rectangular or square shape.

According to one aspect of the invention, the covering element 42 is preferably made of a glass material of the type selectable from: transparent, semi-transparent, translucent.

Advantageously, an operator can view and/or inspect the work area of a product being machined through the shielding means 40, i.e. inside the shielding volume, during a machining of the product itself. According to one aspect of the invention, the laser cutting machine 100 further comprises a control unit (not illustrated in the appended figures), for example comprising a control system of the CNC (computerised numerical control) type, and is configured to receive instructions (for example coming from a CAD - computer-aided design file) containing a plurality of parameters relating to a geometry of a product to be cut. The control unit controls the movement of the cutting unit 30 and a power of the laser beam generated by the laser source, to perform laser cutting so as to replicate the aforesaid geometry of the product previously designed by means of CAD.

With reference to the appended figures, the operation of the invention is the following. The cutting unit 30 is movable vertically along the cutting axis Z-Z, by means of the first pair of slide guides 50a, 50b, towards and/or away from the surface of a product to be machined, in particular between the rest and work configurations.

Substantially, simultaneously with and independent of the movement of the cutting unit 30, the shielding means 40 is movable (reciprocally with the cutting unit 30) along the cutting axis Z-Z, by means of the second pair of slide guides 60a, 60b, independent of the first pair of slide guides 50a, 50b.

In order to enable a safe, reliable and substantially synchronous between the laser cutting unit 30 and the shielding means 40, the machine 100 comprises a pair of dampers 70a, 70b arranged laterally to the cutting unit 30 and to the shielding means 40 and each comprising a respective shaped element 71 integral with the shielding means 40 and a piston 73 of an actuator 72 integral with the cutting unit 30.

The shaped element 71 and the piston 73 are configured to come into reciprocal contact and define the aforesaid movement of the shielding means 40 relative to the laser cutting unit 30.

## Claims

1. A laser cutting machine (100), comprising:
- a support structure (20) configured to be rested on the floor and internally defining a work area (W) adapted to receive a product on which to perform laser machining;
- a laser cutting unit (30) connected to said support structure (20), extending and movable along a cutting axis (Z-Z) transverse to said work area (W);
wherein said laser cutting unit (30) is movable inside said work area (W) along a plane parallel to said work area (W), and is configured to emit a laser beam along said cutting axis (Z-Z) towards the product on which to perform laser machining;
a shielding means (40) integrally connected to said laser cutting unit (30) and configured to define a shielding volume that surrounds, at least partially, said laser cutting unit (30) so as to shield it in relation to an outside environment in which an operator is located, said shielding volume having a smaller surface extent than said work area (W);
and wherein said shielding means (40) defines a barrier that shields against rays reflected by the product on which laser machining is performed and encloses them inside said shielding volume during a laser cutting process;
**characterised in that** said laser cutting unit (30) comprises:
- a frame (25);
- a first pair (50a, 50b) of slide guides, integrally connected to said frame (25), arranged parallel to said cutting axis (Z-Z), and configured to define a sliding coupling with said laser cutting unit (30); and
- a second pair (60a, 60b) of slide guides integrally connected to said frame (25), arranged parallel to said first pair (50a, 50b) of slide guides, and configured to define a sliding coupling with said shielding means (40);
said first and second pairs (50a, 50b, 60a, 60b) of slide guides being independent of each other so as to allow a substantially synchronised sliding movement between said shielding means (40) and said laser cutting unit (30);
and **in that** it comprises a pair of dampers (70a, 70b) interposed between said laser cutting unit (30) and said shielding means (40), each configured to dampen a reciprocal movement of said shielding means (40) relative to said laser cutting unit (30), between said rest configuration and said working configuration;
wherein each damper (70a, 70b) comprises:
- a shaped element (71) mounted integral with the shielding means (40), arranged parallel to the cutting axis (Z-Z) and comprising a stop portion (72) extending transversely to and projecting from said cutting axis (Z-Z) and configured to define a mechanical stop; and
- a cylindrical actuator (73) mounted integral with said laser cutting unit (30), arranged parallel to said cutting axis (Z-Z), and comprising a piston (74) configured to intercept and abut against said stop portion (72) and define said mechanical stop.

2. The laser cutting machine (100) according to claim 1, wherein said shielding means (40) is slidably connected to said laser cutting unit (30) and movable along said cutting axis (Z-Z) between a rest configuration, in which the shielding means (40) is in an inactive position, and a working configuration, in which said shielding means (40) is in an active position.

3. The laser cutting machine (100) according to claim 1 or 2, wherein said shielding means (40) comprises a plurality of panels (40a, 40b, 40c) connected to one another so as to define a shielding shell that surrounds, at least partially, said laser cutting unit (30).

4. The laser cutting machine (100) according to claim 3, wherein said panels (40a, 40b, 40c) are connected to one another in such a way as to define a structure having a substantially "C"-type or squared-type shape.

5. The laser cutting machine (100) according to claim 3 or 4, wherein said panels (40a, 40b, 40c) are reversibly connected to one another in such a way as to define a disassemblable structure.

6. The laser cutting machine (100) according to any one of the preceding claims, wherein said cylindrical actuator (73) is a gas spring or a spring cylinder.

7. The laser cutting machine (100) according to any one of the preceding claims, wherein said shielding means (40) comprises brush-like elements (80) connected to each of said panels (40a, 40b, 40c) in a respective edge perimeter portion, so as to reduce and/or limit a diffusion of reflected rays towards the external environment and retain them inside said shielding volume.

8. The laser cutting machine (100) according to any one of the preceding claims, wherein said shielding means (40) has an opening (41) protected by a covering element (42) to enable an operator to visually inspect said shielding volume during the operation of said laser cutting unit (30).

9. The laser cutting machine (100) according to claim 8, wherein said covering element (42) is preferably made of a glass material of the type selectable from: transparent, semi-transparent, translucent.

10. The laser cutting machine according (100) according to claim 7, wherein each of said brush-like elements (80) is made of a deformable, fire-resistant material.
